# EUROPEAN PATENT APPLICATION

(11) **EP 4 841 537 A1**
(43) Date of publication of application: **18.11.2026**
(21) Application number: 26178334.4
(22) Date of filing: 12.05.2026
(51) Int. Cl.: G06Q 10/087, G06Q 10/20, G06Q 10/04

(54) **PRODUCT ALLOCATION SYSTEMS AND METHODS USING ALLOCATION SIMULATION MODELING**

(30) Priority: 13.05.2025 US 202519206612
(71) Applicant: The Boeing Company, Arlington, VA 22202 (US)
(72) Inventor: AHMAD, Nayef, TORONTO (CA); TAN, Kemal Baris, VANCOUVER (CA); CHEN, Zi Wei, RICHMOND (CA); GROCHOWSKI, Gavin Ross, VANCOUVER (CA); KALIMULLINA, Tamila, VANCOUVER (CA)
(74) Representative: Plasseraud IP

(57) **Abstract**

A product allocation system for planning the allocation of inventory at plural locations using allocation simulation models is provided. The system includes an allocation simulation model having a product allocation module, a failure module, and a performance module. The product allocation module generates a distribution plan based on allocation parameters and one or more user inputs. The allocation parameters are associated with inventory and plural locations. The inventory includes plural different parts that may be used within a powered system. The failure module generates one or more simulated failures based on historical failure data of the inventory, historical usage data of the inventory, or historical maintenance data of the powered system. The performance module analyzes the distribution plan generated by the product allocation module relative to each of the one or more simulated failures generated by the failure module to determine an inventory allocation recommendation.

## Description

### BACKGROUND

### FIELD OF THE DISCLOSURE

The present disclosure relates to a product allocation systems and methods for the allocation of parts at numerous locations.

### DESCRIPTION OF THE ART

It is a common goal within the aviation industry for airlines to achieve a desired service target for part failures at minimum cost. In order to address maintenance and repair issues across a fleet of aircraft systems traveling between numerous locations, the airlines may develop an allocation plan that identifies a number of spare parts that may be dispersed at the numerous locations. There is a trade-off, however, in budget allocation and inventory performance that must be understood. For example, it would be financially impractical for the airline to keep an excess stock of inventory at each and every location.

Known allocation planning solutions include a greedy heuristic approach that can generate a single candidate for a given set of inputs. The heuristic algorithm would use, for example, measures of part criticality (e.g., based on reliability metrics such as "mean time between unscheduled removals") and station criticality (e.g., how frequently a repair station was visited) to rank part/station combinations, from which an allocation budget would be assigned. However, this approach generates one possible solution with no guarantee that it is the best solution, or close to the best solution. Moreover, such heuristic allocation approaches create allocations that may be rather conservative, assigning similar quantities of different parts across all parts and all airports.

Furthermore, once the inventory allocation is generated, the process of iterating upon it includes manual operations, making it unfeasible for a human to iterate more than a handful of times and only within a search space around the initial allocation, leaving out opportunities for better solutions.

### BRIEF SUMMARY

A need exists for a metaheuristic optimization system and method to automate a search process for identifying an optimum allocation of spare parts across numerous airports. Moreover, a need exists for an allocation optimization method that rapidly searches through an enormous number of candidate solutions (using simulation-based optimization), evaluate each of the candidate solutions, and then iteratively refine them until an optimum allocation recommendation is determined.

With these needs in mind, in one example, a product allocation system for planning the allocation of inventory at plural locations using allocation simulation models is provided. The system includes an allocation simulation model having a product allocation module, a failure module, and a performance module. The product allocation module generates a distribution plan based on allocation parameters and one or more user inputs. The allocation parameters are associated with inventory and plural locations. The inventory includes plural different parts that may be used within a powered system. The failure module generates one or more simulated failures based on historical failure data of the inventory, historical usage data of the inventory, or historical maintenance data of the powered system. The performance module analyzes the distribution plan generated by the product allocation module relative to each of the one or more simulated failures generated by the failure module to evaluate the one or more simulated failures in order to determine an optimized allocation scenario.

In another example, a method of planning allocation of inventory at plural locations using allocation simulation models is provided. The method involves receiving one or more user inputs and generating a distribution plan based in part on allocation parameters and the one or more user inputs. The allocation parameters are associated with inventory and plural locations. The inventory includes plural different parts that are to be used within a powered system. One or more simulated failures are generated based on historical failure data of the inventory, historical usage data of the inventory, or historical maintenance data of the powered system. The distribution plan is analyzed relative to each of the one or more simulated failures to determine an inventory allocation recommendation.

In another example, a product allocation system for planning the allocation of inventory at plural locations is provided. The system includes an input device that receives one or more user inputs and an allocation simulation model having a product allocation module, a failure module, and a performance module. The product allocation module generates a distribution plan based in part on allocation parameters and the one or more user inputs. The allocation parameters are associated with inventory and plural locations. The inventory includes plural different parts that are used within a powered system. The failure module generates one or more simulated failures based on historical failure data of the inventory, historical usage data of the inventory, or historical maintenance data of the powered system. The performance module analyzes the distribution plan generated by the product allocation module relative to each of the one or more simulated failures generated by the failure module to create a matrix of recommendations. The performance module determines an inventory allocation recommendation based in part on the matrix of recommendations.

The allocation simulation model may compare the inventory allocation recommendation with an actual allocation plan. The performance module can generate an alert responsive to the inventory allocation recommendation differing from the actual allocation plan. The alert prompts updating the inventory dispersed at the plural locations.

### BRIEF DESCRIPTION OF THE DRAWINGS

Figure 1 illustrates a schematic of a product allocation system, according to one example of the present disclosure.
Figure 2 illustrates a schematic of a method of operating the product allocation system, according to one example of the present disclosure.
Figure 3 illustrates examples of distribution plans of inventory, according to one example of the present disclosure.
Figure 4 illustrates a graph of planning the allocation of inventory, according to one example of the present disclosure.
Figure 5 illustrates a flow chart of a method of planning allocation of inventory, according to one example of the present disclosure.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

In the realm of inventory allocation planning, there is a need for a system that automatically determines an optimal allocation plan that meets budget constraints and disperses hundreds of inventory parts across a network of locations. Moreover, there is a need for a system that allows for reviewing, iterating, and improving allocation plans in a timely manner. The present systems and methods provide to an operator a planning system with AI-driven query capabilities that examines the allocation of thousands of parts across hundreds of different locations in order to identify an optimal allocation recommendation. The planning system generates distribution plans and simulated failures to create a matrix of potential candidate allocation recommendations. The distribution plan(s) and the simulated failures may be based on one or more preset rules, or may be learned from an artificial intelligence (AI) system.

In one example, the product allocation systems and methods described herein may include an AI powered system that automates a search process for identifying an optimum allocation of spare parts across numerous different airports, and particularly within a budget constraint. Compared with known heuristic inventory allocation algorithms, the systems and methods provide improved system modules that rapidly search through an enormous number of candidate solutions to find an optimal solution based on constraints and preferences, improving overall efficiency. The systems and methods utilize simulation-based optimization by specifying a process of Monte Carlo (or the like) and discrete event simulations and the objective function to the optimization method.

For example, the systems and methods described herein improve existing heuristic allocation by automatically generating new candidate solutions, evaluating them relative to simulated failure scenarios, and iteratively updating the candidate solutions. In one or more examples, the candidate solutions may be tuned to accommodate different requirements, different preferences of the user, or the like. The systems and methods identify an optimal allocation plan that spreads inventory across an entire network of locations, while staying within a budget constraints and meeting or achieving target levels of service.

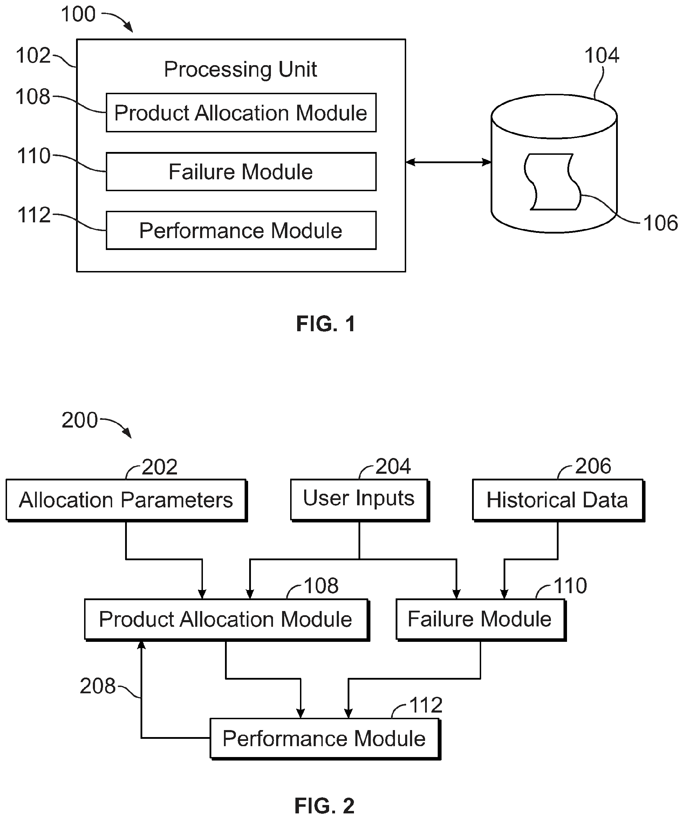

Figure 1 illustrates a schematic of a product allocation system 100, according to one example of the present disclosure. The product allocation system 100 provides a comprehensive framework designed to enhance the efficiency and optimization of allocating inventory at numerous locations by utilizing allocation simulation models. In one or more examples, the allocation simulation models may be machine learning-based models, may be artificial intelligence (AI) models, optimization models, or the like. This product allocation system 100 provides a structured approach to the allocation of inventory by integrating various components that work in tandem to monitor, analyze, and predict the optimal allocation strategy.

In one or more examples, the inventory may include dozens, hundreds, or thousands of different parts that may be used within a powered system, and the inventory may need to be distributed across dozens, hundreds, or thousands of different global locations. As one example, the product allocation system 100 may be used by an organization that may want to determine an optimal distribution of numerous different parts associated with one or more powered system at the plural different locations where the powered systems may be positioned, may travel, may be repaired or maintained, etc. The organization may be associated with vehicles, such as aircraft systems, marine vessels, mining vehicles, rail vehicles, or the like. As another example, the system 100 may be used by non-vehicular organizations, such as utilities organization (e.g., an electric company, a waste management company, a plumbing organization) that may want to determine an optimal distribution plan for numerous different parts associated with powered systems positioned at plural different locations.

The organization may provide at least some information associated with the different parts included in the inventory that may be need to be held or owned by the organization, information associated with historical needs associated with the different parts (e.g., when and/or where planned and/or unplanned maintenance events occurred, details associated with events that lead to the planned and/or unplanned maintenance, etc.), budgeting information (e.g., designated by the organization, material costs associated with each of the parts, etc.) a target level of service the organization intends to achieve, etc. For example, the product allocation system 100 can receive or otherwise obtain designated priority levels assigned to each different part included within the inventory, financial information associated with each of the different parts, an identification of each of the different locations at which inventory is to be held, a number or list of the number of powered systems the inventory is intended to support, budgeting information designated by the airline, a quality assessment of the different parts, or the like. The product allocation system 100 may generate an inventory allocation recommendation based in part on the information obtained and/or information learned by the machine learning-based allocation simulation models.

In one or more examples, the product allocation system 100 also can be referred to as an optimization allocation simulation model system. The allocation simulation model system may rely on machine learning-based models, AI model, or the like, in order to determine optimized allocation scenarios. For example, the system 100 can receive information, may process the data through machine learning models, and generate an inventory allocation recommendation based on the analysis of operational outputs. The system 100 integrates multiple modules that work in concert to examine the data and analyze numerous different allocation recommendations in light of simulated failure behaviors to identify an optimal allocation strategy.

The product allocation system 100 includes a processing unit 102 that represents hardware circuitry that includes and/or is connected with one or more processors. The processing unit 102 in the product allocation system 100 can represent various types of processors, each suited to handle the complex computations required for data processing and machine learning tasks, such as associated with strategic planning and/or scenario analysis as described herein. Examples of different processors that the processing unit 102 can represent include one or more central processing units (CPU), graphics processing units (GPU), field-programmable gate arrays (FPGA), application-specific integrated circuits (ASIC), digital signal processors (DSP), tensor processing units (TPU), or the like.

The processing unit 102 operates as a central hub for data processing and analysis, coordinating the activities of the various modules within the system 100. The processing unit 102 can be responsible for executing the machine learning algorithms of allocation simulation models 106, enabling the allocation simulation models 106 to process operational data, historical data, input data, and/or simulated data, in order to determine a recommendation of a preferred distribution of numerous parts across numerous locations. For example, the processing unit 102 may be equipped with the computational resources necessary to handle the complex calculations involved in product allocation, ensuring the system 100 can operate efficiently and effectively in real-time.

In one example, the processing unit 102 may interface with an input/output device (not shown) through which an operator of the system 100 may input some data. As another example, the processing unit 102 may interface with a memory 104 that may store or maintain at least some data that may be used by the processing unit 102 in generating the allocation recommendation. The memory 104 can store the allocation simulation models 106 and the data used by the processing unit 102. The memory 104 can represent various types of computer memory, such as read-only memory (ROM), flash memory, one or more solid-state drives (SSD), hard disk drives (HDD), network-attached storage (NAS), or the like. As another example, the processing unit 102 may interface with one or more remote databases, that may store or maintain at least some data.

In one or more examples, the processing unit 102 may represent and/or include an artificial intelligence (AI), machine learning (ML), artificial neural network (ANN), a recurrent neural network (RNN), a long short-term memory (LSTM) network, or the like, that can access data stored within the memory 104, and that performs operations described herein. The AI system can assist an operator of the product allocation system 100, such as by analyzing data in order to determine an optimal inventory allocation recommendation. As one example, the allocation simulation models 106 can employ advanced machine learning techniques, such as recurrent neural networks (RNNs), convolutional neural networks (CNNs), and transformers, to handle the data received from user inputs, data obtained from the memory 104, and/or data obtained from one or more databases (not shown). The allocation simulation models 106

In one or more examples, the product allocation system 100 includes a product allocation module 108, a failure module 110, and a performance module 112. The modules in the context of hardware may refer to a distinct, self-contained unit within the processing unit 102 that performs specific functions.

The product allocation module 108 may focus on generating an allocation of parts to locations, based on one or more of part criticality, a network of associated locations, etc. This module is important in generating an allocation of parts to different geographic locations based on part criticality and the network of locations and powered systems (e.g., a flight network, airport network, aircraft fleet, etc.) under consideration. The product allocation module 108 can receive or obtain data from the memory 104, and/or data obtained from one or more databases (not shown), that can represent allocation parameters associated with the inventory and/or the plural locations at which the inventory is to be distributed. The product allocation module 108 can receive or obtain the allocation parameters and/or the user inputs, and use these parameters to generate a distribution plan.

The failure module 110 may focus on generating simulated failures (e.g., of individual parts and/or of the powered systems in which the parts are installed), simulated failure times, anticipated failures, anticipated failure times, or any alternative simulated failure behaviors. This module is important in generating simulated failure times and assign the simulated failure times to geographic locations based on assumed and/or simulated flight behavior. The failure module 110 can receive or otherwise obtain data representative of historical failure data of the inventory, historical failure and/or usage data of the powered system (e.g. the aircraft system), historical maintenance data of the powered system, or the like. The failure module 110 can use the data to generate one or more simulated failures (e.g., of specific parts, of the powered system, etc.).

The performance module 112 may receive the distribution plan generated by the product allocation module 108 and the one or more simulated failures generated by the failure module 110, and may analyze, examine, compare, etc., each of the different scenarios between the distribution plan and each of the one or more simulated failures. This module is important in examining simulated demands of parts at plural different geographic locations to identify whether or not the simulated demands will be met based on the distribution plan. The performance module 112 may analyze a number of different scenarios between the distribution plan (generated by the product allocation module 108) and the simulated failures (generated by the failure module 110) in order to examine if the necessary parts would be available at specific locations in order to support maintenance or repair events based on the simulated failures.

For example, the performance module 112 may examine the distribution plan in view of the simulated failures to determine, within the simulation, how often necessary inventory was available when a particular part was needed at a specific location (e.g., if the inventory demands would be met). Additionally, the performance module 112 may determine how often necessary inventory was not available when a particular part was needed at a specific location (e.g., if the inventory demands would not be met). For example, the performance module 112 may determine a first frequency at which the appropriate inventory is available to satisfy a need associated with the one or more simulated failures based on the distribution plan; and may determine a second frequency at which the appropriate inventory is not available to satisfy the need associated with the one or more simulated failures based on the distribution plan.

In one or more examples, the performance module may be referred to as a monitoring module that monitors and evaluates the distribution plans. For example, the performance or monitoring module may evaluate the one or more distribution plans, and the evaluation of the distribution plans may be used as feedback to the allocation module. The allocation module may use the evaluation results to try to continue to improve the allocation scenarios. The improved allocation scenarios may be submitted to the performance or monitoring module, which may again evaluate the improved allocation scenarios, and provide the evaluation results of the improved allocation scenarios back to the allocation module. This looped cyclical process may repeat a handful of times, dozens of times, hundreds of times, or the like, with the end result being an optimized allocation. The evaluation cyclical process may be completed by the processors within a period of time that is significantly less than a period of time it would take a human being. For example, the processors may automatically complete the evaluation process and determine the optimized allocation within a few minutes, within a few hours, or the like. Alternatively, it would take a human being months or even years to complete such an analysis, and the optimization allocation determined by the human would be less optimal than the optimization result automatically determined by the allocation module.

In one or more examples, the performance or monitoring module may be integrated within a manufacturing execution system (MES) software of an end user. For example, an airline may incorporate a portion of the allocation system within the MES software, which may track the actual inventory of the airline at the plural different locations in real-time. The MES software may access the optimized allocation scenario determined by the performance module and may automatically initiate the updating of inventory at the plural different locations based on the optimized allocation scenario. In one or more examples, the MES software may continuously monitor the inventory allocated at the plural different locations in real-time, and may determine that the actual inventory allocation differs from the optimized allocation scenario. The MES software may be configured to automatically prompt updating the inventory dispersed at the plural locations (e.g., automatically order more inventory, communicate alerts to change a distribution of inventory between two or more locations, etc.) so that the actual inventory allocation matches or aligns with the optimized allocation scenario.

Figure 2 illustrates a schematic 200 of a method of operating the product allocation system 100, according to one example of the present disclosure. The product allocation module 108 may receive or otherwise obtain allocation parameters 202 and user inputs 204 and may generate the distribution plan(s) based on the allocation parameters 202 and the user inputs 204. The failure module 110 may receive or otherwise obtain the user inputs 204 and historical data 206 and may generate the one or more simulated failures based on the user inputs 204 and the historical data 206.

In one or more examples, the allocation parameters 202 may include, but are not limited to, a list of the different parts including in the inventor analysis, a priority level assigned to each of the different parts, financial information associated with each of the different parts (e.g., costs), budgeting information (e.g., an overall target budget, a target budget for each of the plural different locations where parts are to be distributed, etc.), a quality assessment of each of the different parts, a quality assessment of each of the powered systems (e.g., aircraft systems, or the like) within which the inventory is used, or the like. In one or more examples, some of the allocation parameters 202 may be stored within the memory 104 of the product allocation system 100, within one or more databases (not shown) to which the system 100 has access (e.g., databases maintained by the product allocation system 100, maintained by a third party, or the like), or the like.

In one or more examples, the user inputs 204 may be provided to the product allocation module 108 and/or the failure module 110 via an input/output device (not shown) of the product allocation system 100. In one or more examples, the user inputs may include at least some of the allocation parameters. For example, an operator of the system 100 may provide as a user input one or more of the allocation parameters. In another example, the user inputs may override one or more of the allocation parameters, such as some of the parameters stored within the memory 104. As another example, the user inputs may supplement at least some information that is missing from the allocation parameters.

In one or more examples, the historical data 206 may include, but is not limited to, historical failure data of the inventory, historical usage data of the inventory (e.g., a number of cycles the parts were used prior to failure), historical maintenance data of the inventory (e.g., of each part included in the list of inventory), historical failure and/or usage data of the powered system (e.g. a number of times the aircraft system was used, a cumulative amount of travel of the aircraft system prior to failure, etc.), historical maintenance data of the powered system, or the like. In one or more examples, the failure module 110 may consider environmental conditions associated with each of the historical failure events, ambient environmental conditions at each of the plural locations configured to hold inventory, environmental data the powered system was exposed to during previous use (e.g., flight paths of previous travel of aircraft systems, departing and destination locations, etc.), or the like. The failure module 110 can use the data to generate one or more simulated failures (e.g., of specific parts, of the powered system, etc.).

The distribution plan generated by the product allocation module 108 may be combined with, associated with, etc., the one or more simulated failures generated by the failure module 110 in order to create numerous different scenarios and a matrix of each corresponding recommendation associated with each different scenario. Each of the different scenarios may indicate a number of each part of an inventory list that is to be dispersed at each of the different locations. In one or more examples, each of the different scenarios may represent a candidate solution of an inventory allocation recommendation. The performance module 112 may analyze each of the potential candidates in order to determine whether one of the potential candidates is more optimal relative to another candidate based on one or more of the predetermined requirements, preferences, priorities parameters, stipulations, etc. For example, the performance module 112 may examine each of the numerous different scenarios associated with the distribution plan and the one or more simulated failures to determine an optimal inventory allocation recommendation within the matrix of recommendations.

The inventory allocation recommendation may specify a number of each part to be distributed at each of the plural locations. The optimal inventory allocation recommendation may be based on one or more predetermined requirements, preferences, priorities parameters, stipulations. As one example, the priorities may identify that it is preferred to achieve a targeted budget while sacrificing a level of service. As another example, the priorities may identify that it is preferred to achieve a level of service regardless of a budget. For example, a $20million budget may be achieved while fulfilling about an 85% service demand. Alternatively, a 95% service demand may be achieved at the cost of about a $40million budget.

In one or more examples, the performance module 112 may determine that the inventory allocation recommendation may need to be refined, narrowed, or the like, and may automatically (e.g., without operator input) initiate one or more iterations or changes be made to the distribution plan based on the analysis of the distribution plan relative to the simulated failures. For example, the performance module 112 may be unable to identify an optimal inventory recommendation, and as a result, may initiate an iteration response 208 that may direct the product allocation module 108 to determine a different, second distribution plan. The second distribution plan may be based on updated allocation parameters, additional or alternative user inputs, or the like. The second distribution plan may differ from the original or first distribution plan by specifying a different number of one or more of the parts to be dispersed at one or more of the plural locations. The performance module 112 may receive the updated, second distribution plan from the product allocation module 108, and may examine or analyze the second distribution plan in view of the simulated failures in order to determine the inventory allocation recommendation.

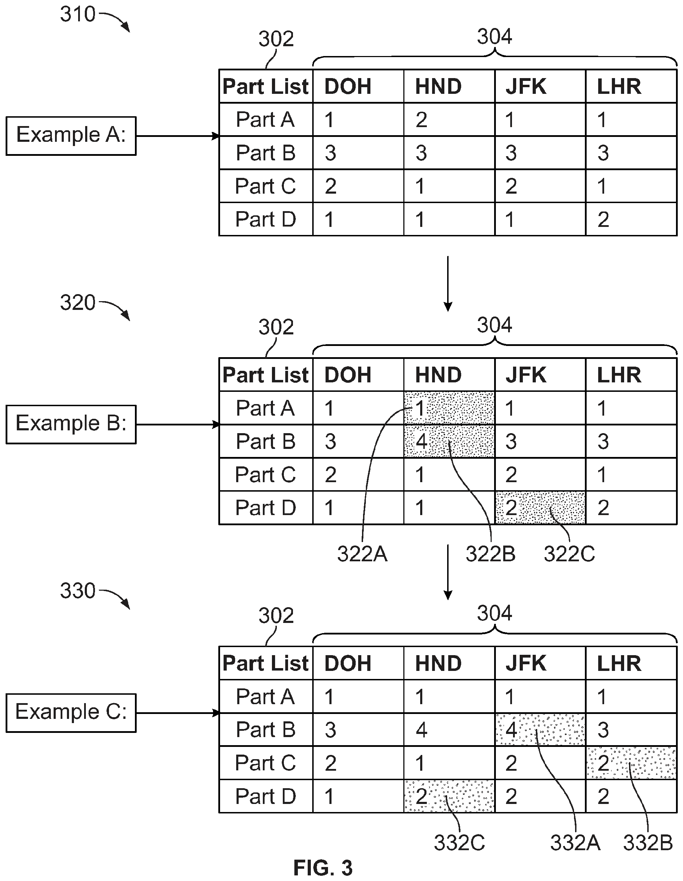

Figure 3 illustrates examples of distribution plans of inventory, according to one example of the present disclosure. A first table 310 represents a first distribution plan that may be generated by the product allocation module 108. The first table 310 includes a parts list 302 and plural locations 304 where a number of each part of the list 302 may be dispersed. In the illustrated example, the first table 310 includes an inventory that includes four different parts to be distributed across four different locations. In another example, the distribution plan may include dozens, hundreds, or thousands of different parts that are to be distributed across dozens, hundreds, or thousands of different locations. The first distribution plan may be generated by the product allocation module 108 based in part on some of the allocation parameters and/or user inputs received by the product allocation system 100. The performance module 112 may analyze the first distribution plan in view of the one or more simulated failures generated by the failure module 110 and determine that the first distribution plan can be further refined, narrowed, or the like, in particular in view of one or more predetermined preferences (e.g., budget, fulfillment service level target, etc.). The performance module 112 may initiate a new, second distribution plan to be generated.

A second table 320 represents a second distribution plan (e.g., a first iteration of the original distribution plan). The second table 320 includes the same parts list 302 and the plural locations 304 where the parts are to be dispersed. The second table 320 includes plural first variations 322A, 322B, 322C in which the second distribution plan differs from the first distribution plan. The performance module 112 may analyze the second distribution plan in view of the simulated failures generated by the failure module 110 and determine that the second distribution plan can be further refined, narrowed, etc. The performance module 112 may initiate a new, third distribution plan to be generated. A third table 330 represents a third distribution plan (e.g., a second iteration of the original distribution plan). The third table 330 includes the same parts list 302 and the plural locations 304. The third table 330 includes plural second variations 332A, 332B, 332C in which the third distribution plan differs from the second distribution plan. The performance module 112 may analyze the third distribution plan in view of the simulated failures and generated whether or not the third distribution plan is to be further refined or narrowed.

In the illustrated example of Figure 3, three examples of revised distribution plans are illustrated, but in other examples, the distribution plan may be revised dozens of times, hundreds of times, thousands of times, millions of times, or the like. In one or more examples, the process of re-iterating or revising the distribution plan, and examining revised distribution plans in view of the simulated failures may continue until the allocation simulation models 106 determine that an ideal, optimal, or preferred inventory allocation recommendation has been generated, such as based on predetermined priorities, preferences, stipulations, requirements, or the like.

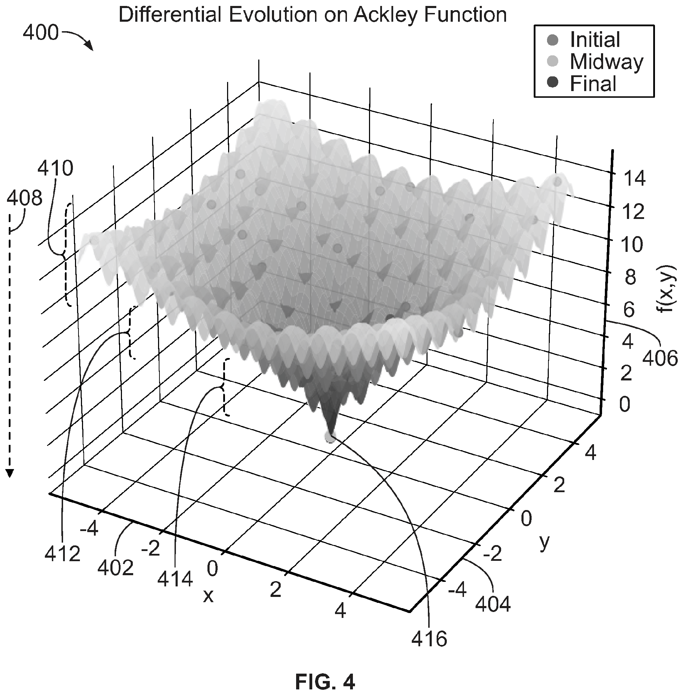

Figure 4 illustrates a graph 400 of planning the allocation of inventory, according to one example of the present disclosure. In one or more examples, the allocation simulation models 106 may use an evolution algorithm, such as a differential evolution algorithm, to examine the distribution plans in view of the simulated failures in order to determine the inventory allocation recommendation. Optionally, the models 106 may use an alternative algorithm that may similarly examine an astronomical number of scenarios in order to identify an optimal inventory recommendation. In the illustrated example, the graph 400 may be generated by examining the allocation simulation models 106, such as a differential evolution, based on the Ackley function. Optionally, another simulation model may be applied and may be examined or tested via an alternative mathematical function.

The graph 400 includes a first axis 402, a second axis 404, and a third axis 406. The graph 400 may represent the examination of an astronomically large number of scenarios between the distribution plans and the simulated failures. The number of scenarios may be hundreds, thousands, millions, billions, trillions, or the like. The different scenarios may be associated with the different number of each of the different parts that may be dispersed at each of the different locations. Optionally, the scenarios may be associated with the different number of parts for plural different types of powered systems (e.g., different types of aircraft systems) that may be dispersed at each of the different locations.

The performance module 112 may evaluate each of the different scenarios associated with each iteration of the distribution plan in order to identify an inventory allocation recommendation 416. For example, a first grouping of scenarios 410 may be reduced to a second grouping of scenarios 412, and to a subsequent third grouping of scenarios 414 in a direction 408 along the third axis 406 until the inventory allocation recommendation 416 is determined.

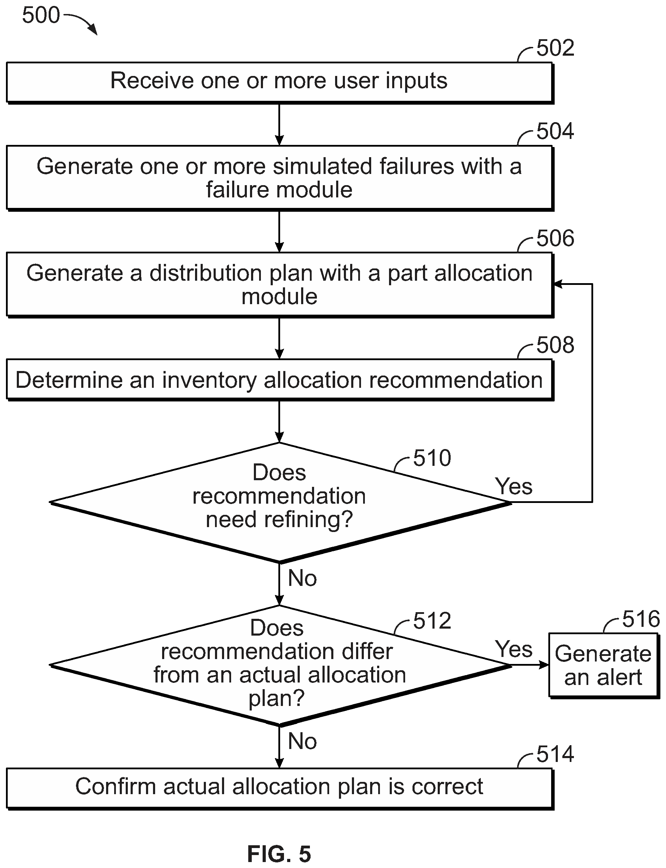

Figure 5 illustrates a flow chart 500 of a method of planning allocation of inventory, according to one example of the present disclosure. In one or more examples, one or more of the steps of the flow chart 500 may be completed in an alternative order, may be removed from the flow chart, may be completed at substantially the same time as another step, or the like.

At 502, the processing unit 102 may receive one or more user inputs, such as via an input device of the product allocation system. Additionally, the processing unit 102 may receive or otherwise obtain allocation parameters associated with inventory that is configured to be held at plural different locations. The allocation parameters and/or the user inputs may include, but are not limited to, a list of the different parts associated with the inventory, a priority level assigned to each of the different parts, financial information associated with each of the different parts, an identification of each of the different locations at which inventory is to be held, a number or list of the number of powered systems the inventory is intended to support, budgeting information, a quality assessment of each of the different parts, a quality assessment of the plural powered systems in which the parts are used, or the like. Additionally, the user inputs and/or the allocation parameters may include one or more predetermined requirements, preferences, priorities parameters, stipulations, etc. The predetermined requirements or preferences may be unique to the operator of the product allocation system 100, may be based on one or more governmental regulatory requirements, may be based on trends of other entities or organizations, or the like.

At 504, one or more simulated failures may be generated by a failure module and at 506, a distribution plan may be generated by a product allocation module. The simulated failures may be based the user inputs and/or on historical failure data of the inventory, historical usage data of the inventory, historical maintenance data of the powered system, or the like. The distribution plan may be based on the allocation parameters and/or the user inputs.

At 508, the one or more simulated failures and the distribution plan may be combined to present a number of different scenarios, which may be analyzed in order to determine an inventory allocation recommendation. Each of the different scenarios may represent a candidate allocation recommendation that may be examined based on predetermined priorities, preferences, stipulations, requirements, or the like.

At 510, a determination is made if the inventory allocation recommendation determined at 508 requires refining. For example, the inventory allocation recommendation is analyzed in order to determine if the inventory allocation recommendation is the ideal, optimal, or preferred inventory allocation recommendation, such as based on the predetermined priorities, preferences, stipulations, requirements, or the like. If the recommendation needs to be further refined, flow of the method returns to 506 and the distribution plan is revised or iterated in order to generate a sequential distribution plan is generated. The steps of 506, 508, and 510 may continue to repeat until it is determined that the inventory allocation recommendation is the optimal recommendation based on the predetermined preferences and priorities.

At 512, a determination is made if the inventory allocation recommendation differs from an actual allocation plan. For example, the processing unit 102 may examine the inventory allocation recommendation relative to a current or actual allocation plan to determine if the actual number of each of the parts presently dispersed at specific geographic locations matches the recommended number of each of the parts that should be dispersed at each of the geographic locations.

If the number of each part currently dispersed at each of the locations is aligned with the recommended number of each part that should be dispersed at each of the locations, flow of the method proceeds toward 514, and the processing unit 102 may communicate a confirmation message, such as to an operator of the product allocation system 100.

Alternatively, if the number of each part currently dispersed at each of the locations differs from the recommendation, at 516, the processing unit 102 may initiate an alert to be communicated, such as to an operator of the product allocation system 100. In one example, the alert may prompt one or more tasks associated with updating the inventory that is currently dispersed at the plural locations. For example, the one or more tasks may include automatically initiating purchase orders in order to purchase additional parts and/or materials, may include automatically communicating instructions to each of the plural locations indicating the updates each location needs to make to the stored inventory, may include prompting one or more groups or departments at each of the locations to update the inventory stored at each respective location, or the like.

Referring to Figures 1-5, examples of the subject disclosure provide systems and methods that allow large amounts of data to be quickly and efficiently analyzed by a computing device. For example, the processing unit 102 can receive and analyze the hundreds, thousands, millions, or more data and/or records that may be in the form of different types of modalities. The processing unit 102 may also analyze the data associated with the real-time situational awareness (e.g., real-time inventory lists, real-time failures, real-time maintenance events, etc.) to identify numerous different candidates of distribution plans, and examine how each of the candidate distribution plans may handle each of the plural simulated failures for thousands of power systems (e.g., aircraft systems), thousands of locations (e.g., airports, maintenance or repair locations, aircraft hubs, or the like). As such, large amounts of data, which may not be discernable by human beings, are being tracked and analyzed. The vast amounts of data are efficiently organized and/or analyzed by the processing unit 102, as described herein.

The processing unit 102 analyzes the data in a relatively short time in order to quickly and efficiently determine the large number of scenarios, analyze each scenario, adjust a distribution plan a number of times to create additional scenarios, and continue the analysis until an optimal inventory allocation recommendation is determined. A human being would be incapable of efficiently analyzing such vast amounts of data in such a short time. For example, the processing unit 102 may be capable of analyzing an astronomically large number of scenarios associated with potential distribution plans and simulated failures to identify an optimal inventory recommendation within a period of time that is significantly less than a period of time it would take a human being. For example, the processing unit 102 may identify the optimal inventory recommendation within a few hours, compared to the years that it would take for a human being to run such an analysis. As such, examples of the present disclosure provide increased and efficient functionality, and vastly superior performance in relation to a human being analyzing the vast amounts of data.

In at least one example, components of the product allocation system 100, such as the processing unit 102, provide and/or enable a computer system to operate as a special computer system for monitoring and/or auditing maintenance, inspection, and/or repair work completed by a human operator. The processing unit 102 improves upon standard computing devices by monitoring real-time situational awareness conditions, automatically identifying potential issues or disruptions that may occur, and communicating notifications, recommendations, or the like, with individuals in an efficient and effective manner.

In at least one example, the processing unit 102 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data.

Based on this feedback, the systems may be trained by adjusting one or more parameters, weights, rules, criteria, or the like, used in the analysis of the same. This process can be performed using the data and ensemble data instead of training data, and may be repeated many times to repeatedly improve the monitoring and analyzing performed by the processing unit 102. The training minimizes conflicts and interference by performing an iterative training algorithm, in which the systems are retrained with an updated set of data (for example, data associated with user inputs received by the processing unit 102, data associated with the development and analysis of different scenarios, data associated with budgeting preferences and/or service level targets of the user etc.) and based on the feedback examined prior to the most recent training of the systems. This provides a robust analysis model that can better determine situational information in a cost effective and efficient manner.

Also provided are the following illustrative, non-exhaustive examples of the subject-matter encompassed herein, which relate to:
A product allocation system for planning allocation of inventory at plural locations using machine learning-based allocation simulation models, the product allocation system comprising: a machine learning-based allocation simulation model having: a product allocation module configured to generate a distribution plan based on allocation parameters and one or more user inputs, the allocation parameters associated with inventory and plural locations, the inventory including plural different parts configured to be used within a powered system; a failure module configured to generate one or more simulated failures based on one or more of historical failure data of the inventory, historical usage data of the inventory, or the historical maintenance data of the powered system; and a performance module configured to analyze the distribution plan generated by the product allocation module relative to each of the one or more simulated failures generated by the failure module to determine an inventory allocation recommendation.

The product allocation system described in the immediately preceding paragraph, wherein the performance module is configured to compare the inventory allocation recommendation with an actual allocation plan, wherein the performance module is configured to generate an alert responsive to the inventory allocation recommendation differing from the actual allocation plan, the alert configured to prompt updating the inventory dispersed at the plural locations.

The product allocation system described in any of the two immediately preceding paragraphs, wherein the performance module is configured to analyze the distribution plan relative to each of the one or more simulated failures to create a matrix of recommendations, wherein the performance module is configured to determine the inventory allocation recommendation based at least in part on the matrix of recommendations.

The product allocation system described in any of the three immediately preceding paragraphs, wherein the allocation parameters include one or more of a list of the different parts, a priority level of each of the different parts, an identification of each of the plurals locations at which inventory is to be held, a number of powered systems the inventory supports, financial information associated with each of the different parts, budgeting information, or a quality assessment of one or more of each of the different parts or the powered system.

The product allocation system described in any of the four immediately preceding paragraphs, wherein the inventory allocation recommendation is configured to identify a number of each of the different parts configured to be dispersed at each of the plural locations.

The product allocation system described in any of the five immediately preceding paragraphs, wherein the product allocation module is configured to receive one or more of updated allocation parameters or one or more additional user inputs responsive to the determination of the inventory allocation recommendation, and wherein the product allocation module is configured to generate a second distribution plan based on one or more of the one or more updated allocation parameters or the one or more additional user inputs.

The product allocation system described in the immediately preceding paragraph, wherein the performance module is configured to analyze the second distribution plan relative to the one or more simulated failures to determine a second inventory allocation recommendation.

The product allocation system described in any of the seven immediately preceding paragraphs, wherein the one or more simulated failures are configured to identify anticipated failures of one or more of the inventory or the powered system.

The product allocation system described in any of the eight immediately preceding paragraphs, wherein the performance module is configured to determine a first frequency at which the inventory is available to satisfy a need associated with the one or more simulated failures based on the distribution plan, and wherein the performance module is configured to determine a second frequency at which the inventory is not available to satisfy the need associated with the one or more simulated failures based on the distribution plan.

The product allocation system described in any of the nine immediately preceding paragraphs, wherein the powered system is an aircraft system and the inventory includes the plural different parts configured to be used within the aircraft system.

The product allocation system described in the immediately preceding paragraph, wherein the one or more locations include one or more maintenance or repair centers of the aircraft system.

A method of planning allocation of inventory at plural locations using machine learning-based allocation simulation models, the method comprising: receiving one or more user inputs; generating a distribution plan based in part on allocation parameters and the one or more user inputs, the allocation parameters associated with inventory and plural locations, the inventory including plural different parts configured to be used within a powered system; generating one or more simulated failures based on one or more of historical failure data of the inventory, historical usage data of the inventory, or historical maintenance data of the powered system; and analyzing the distribution plan relative to each of the one or more simulated failures to determine an inventory allocation recommendation.

The method described in the immediately preceding paragraph, further comprising: comparing the inventory allocation recommendation with an actual allocation plan; and generating an alert responsive to the inventory allocation recommendation differing from the actual allocation plan, the alert configured to prompt updating the inventory dispersed at the plural locations.

The method described in any of the two immediately preceding paragraphs, further comprising analyzing the distribution plan with each of the one or more simulated failures to create a matrix of recommendations, wherein the performance module is configured to determine the inventory allocation recommendation based at least in part on the matrix of recommendations.

The method described in any of the three immediately preceding paragraphs, further comprising: generating a second distribution plan responsive to receiving one or more of updated allocation parameters or one or more additional user inputs; and analyzing the second distribution plan relative to each of the one or more simulated failures to determine a second inventory allocation recommendation.

The method described in any of the four immediately preceding paragraphs, further comprising: determining a first frequency at which the inventory is available to satisfy a need associated with the one or more simulated failures based on the distribution plan; and determining a second frequency at which the inventory is not available to satisfy the need associated with the one or more simulated failures based on the distribution plan.

The method described in any first three of the five immediately preceding paragraphs, wherein the powered system is an aircraft system and the inventory includes the plural different parts configured to be used within the aircraft system, and wherein the one or more locations include one or more airports, air fields, or maintenance or repair centers of the aircraft system.

A product allocation system for planning allocation of inventory at plural locations, the product allocation system comprising: an input device configured to receive one or more user inputs; and a machine learning-based allocation simulation model system having: a product allocation module configured to generate a distribution plan based in part on allocation parameters and the one or more user inputs, the allocation parameters associated with inventory and plural locations, the inventory including plural different parts configured to be used within a powered system; a failure module configured to generate one or more simulated failures based on one or more of historical failure data of the inventory, historical usage data of the inventory, or historical maintenance data of the powered system; and a performance module configured to analyze the distribution plan generated by the product allocation module relative to each of the one or more simulated failures generated by the failure module to create a matrix of recommendations, wherein the performance module is configured to determine an inventory allocation recommendation based at least in part on the matrix of recommendations, wherein the machine learning-based allocation simulation model is configured to analyze the inventory allocation recommendation with an actual allocation plan, wherein the performance module is configured to generate an alert responsive to the inventory allocation recommendation differing from the actual allocation plan, the alert configured to prompt updating the inventory dispersed at the plural locations.

The product allocation system described in the immediately preceding paragraph, wherein the performance module is configured to determine a first frequency at which the inventory is available to satisfy a need associated with the one or more simulated failures based on the distribution plan, and wherein the performance module is configured to determine a second frequency at which the inventory is not available to satisfy the need associated with the one or more simulated failures based on the distribution plan.

The product allocation system described in any of the two immediately preceding paragraphs, wherein the inventory allocation recommendation is configured to identify a number of each of the different parts configured to be dispersed at each of the plural locations.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method of planning allocation of inventory at plural locations using allocation simulation models (106), the method comprising:
receiving one or more user inputs (204);
generating a distribution plan (310) based in part on allocation parameters (202) and the one or more user inputs (204), the allocation parameters (202) associated with inventory (302) and plural locations (304), the inventory (302) including plural different parts configured to be used within a powered system;
generating one or more simulated failures based on one or more of historical failure data (206) of the inventory (302), historical usage data (206) of the inventory (302), or historical maintenance data (206) of the powered system; and
analyzing the distribution plan (310) relative to each of the one or more simulated failures to determine an inventory allocation recommendation (320).

2. The method of claim 1, further comprising: creating a matrix of recommendations, wherein the inventory allocation recommendation (320) is determined based at least in part on the matrix of recommendations

3. The method of any of claims 1 - 2, further comprising:
comparing the inventory allocation recommendation (320) with an actual allocation plan; and
generating an alert responsive to the inventory allocation recommendation (320) differing from the actual allocation plan, the alert configured to prompt updating the inventory (302) dispersed at the plural locations (304).

4. The method of any of claims 1 - 3, further comprising analyzing the distribution plan (310) with each of the one or more simulated failures to create a matrix of recommendations, and determining the inventory allocation recommendation (320) based at least in part on the matrix of recommendations.

5. The method of any of claims 1 - 4, wherein the allocation parameters (202) include one or more of a list of the different parts (302), a priority level of each of the different parts (302), an identification of each of the plurals locations (304) at which inventory is to be held, a number of powered systems the inventory supports, financial information associated with each of the different parts (302), budgeting information, or a quality assessment of one or more of each of the different parts (302) or the powered system.

6. The method of any of claims 1 - 5, further comprising: identifying a number of each of the different parts (302) configured to be dispersed at each of the plural locations (304).

7. The method of any of claims 1 - 6, further comprising: receiving one or more of updated allocation parameters (202) or one or more additional user inputs (204) responsive to the determination of the inventory allocation recommendation (320), and
generating a second distribution plan (330) based on one or more of the one or more updated allocation parameters (202) or the one or more additional user inputs (204).

8. The method of claim 7, further comprising: analyzing the second distribution plan (330) relative to the one or more simulated failures to determine a second inventory allocation recommendation.

9. The method of any of claims 1 to 8, wherein the one or more simulated failures are configured to identify anticipated failures of one or more of the inventory or the powered system.

10. The method of any of claims 1 - 9, further comprising:
determining a first frequency at which the inventory (302) is available to satisfy a need associated with the one or more simulated failures based on the distribution plan (310); and
determining a second frequency at which the inventory (302) is not available to satisfy the need associated with the one or more simulated failures based on the distribution plan (310).

11. The method of any of claims 1 - 10, wherein the powered system is an aircraft system and the inventory includes the plural different parts (302) configured to be used within the aircraft system.

12. The method of claim 11, wherein the one or more locations (304) include one or more airports, air fields, or maintenance or repair centers of the aircraft system.

13. A product allocation system (100) for planning allocation of inventory (302) at plural locations (304) using machine learning-based allocation simulation models, the product allocation system (100) comprising:
an allocation simulation model (106) having:
a product allocation module (108) configured to generate a distribution plan (310) based on allocation parameters (202) and one or more user inputs (204), the allocation parameters (202) associated with inventory (302) and plural locations (304), the inventory (302) including plural different parts configured to be used within a powered system;
a failure module (110) configured to generate one or more simulated failures based on one or more of historical failure data (206) of the inventory (302), historical usage data (206) of the inventory (302), or historical maintenance data (206) of the powered system; and
a performance module (112) configured to analyze the distribution plan (310) generated by the product allocation module (108) relative to each of the one or more simulated failures generated by the failure module (110) to determine an inventory allocation recommendation (320).

14. The product allocation system (100) of claim 13, further configured for implementing a method according to any of claims 2 to 12.

15. A computer program comprising instructions which, when the program is executed by a processor of a product allocation system (100), cause the product allocation system (100) to implement a method according to any of claims 1 to 12.
